(19) Europäisches Patentamt / European Patent Office / Office européen des brevets

(11) **EP 3 110 687 B1**

(12) **EUROPEAN PATENT SPECIFICATION**

(45) Date of publication and mention
of the grant of the patent:
**22.07.2020 Bulletin 2020/30**

(21) Application number: **15712420.7**

(22) Date of filing: **26.02.2015**

(51) Int Cl.:
**B60L 50/00** *(2019.01)*

(86) International application number:
**PCT/IB2015/051414**

(87) International publication number:
**WO 2015/128818 (03.09.2015 Gazette 2015/35)**

(54) **AN ELECTRIC VEHICLE WITH CONTROLLABLE GENERATOR**

ELEKTROFAHRZEUG MIT STEUERBAREM GENERATOR

VÉHICULE ÉLECTRIQUE À GÉNÉRATEUR POUVANT ÊTRE COMMANDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2014 DK 201400109**

(43) Date of publication of application:
**04.01.2017 Bulletin 2017/01**

(73) Proprietor: **eSquare ApS
6400 Sønderborg (DK)**

(72) Inventors:
• **SVEJE, Nils
I-20145 Milano (IT)**
• **HANSEN, Jesper Allan
DK-6310 Broager (DK)**
• **NIELSEN, Ole Neis
DK-2200 København N (DK)**

(74) Representative: **Keil & Schaafhausen
Patentanwälte PartGmbB
Friedrichstraße 2-6
60323 Frankfurt am Main (DE)**

(56) References cited:
WO-A1-2013/124764    WO-A2-00/59773
CN-U- 201 761 618    DE-A1- 19 732 468
KR-A- 20120 001 834    KR-A- 20120 093 569
US-A1- 2013 317 679

EP 3 110 687 B1

## Description

The present invention relates to a drive system wherein a typically chain power transmission system is replaced by an electric motor and where the electric motor is powered by a generator, and where the generator is connected to a dynamic naturally powered source through a transmission mechanism, the dynamic naturally powered source being, such as, but not limited to, a biologically driven source like the pedals of a bike operated by a human being. This may be directly linked or there may be energy storage means in-between. The present invention introduces such a vehicle where the generator is capable of adding a controllable counter torque, or more generally a counter force, to the operation of the transmission mechanism and where the energy generation in the generator is related to the counter torque.

## BACKGROUND

It is well known that the optimum pedal angular velocity of the human pedalling is in the area of 60-90rpm. The applied force in the pedals is highly dynamic of nature and cannot be predicted, the dynamic range between the lowest to the highest pedalling force can be in the range of 1000 times.

When a human source apply torque to for example the pedals of a bicycle the resulting energy is governed by the intention of applied force, the human physiology and the construction of the system transmitting the energy to the system. The first is the energy, or torque, applied to form a pedal revolution and this is changed at a slow rate, such as when the user desires to drive at a faster or slower pace, and therefore places more or less force on the pedals.

The second is a low frequency double waveform per pedal revolution as a result of the human anatomy not being capable of producing equal torque around the full encirclement of the pedals. The last is a high frequency related to the generator construction. The present invention describes ways of controlling the counterforce in the pedals to accommodate a high quality user-experience and to harvest the human energy more efficient but still to give the driver the same feeling as driving a classical chain transmission bicycle. It is well known introducing an electric motor in bicycle, especially where they wholly or partly interacts in to assist the user in providing power through a conventional cogwheel-and-chain system. This is a very energy efficient way to transfer the energy, but has disadvantages in that all the mechanical parts needs maintenance, the gearing is mechanical with all the drawbacks of this, such as many cogwheels etc., and further the construction limitation that many of the parts needs to be aligned in straight lines.

Therefore systems have been introduced replacing the chain with other driving methods, such as e.g. disclosed in US application No. 2011/266082, "Asynchronous wired-transmission electric pedalling vehicle driven by human generating power". Here it is disclosed having an asynchronous wired-transmission electric pedalling vehicle driven by human generating power, which is driven by human foot and has sport effect, and it is featured by using human power to drive a generator, and the power generated by the generator is used for driving a motor to drive a load. The system further discloses electric charging/discharging device installed between the generator and the motor, in which: the electric charging/discharging device is constituted by the rechargeable battery, or the capacitor, or ultra-capacitor.

Another document, US Patent No. 7156780, discloses an electric drive system operated by muscle power for a vehicle and includes a foot pedal and a mechanical generator mechanically connected to the foot pedal. The drive system also includes an electric transmission and an electric control system with a control program of the generator, which is able to generate a counter or load moment (GM). The drive system also includes a starting control system for the generator, by means of which a standstill pedal resistance (TW) and a high starting moment (MA) is produced at the foot pedal. When used in a stationary training apparatus, the drive system includes a motor operation control system with a bi-directional converter, by means of which the generator is also able to be operated as a motor. The system further includes electric storage device and a super capacitor.

A third document US Patent Application No. 2012/0202649, disclose a chain less electric cycle design that allows a rider/user to pedal a pedal generator to create an electric transmission energy source that either charges the battery or partially powers a hub motor, discharges the battery to the hub motor contained within one of the wheels, allows the user to set a desired level of resistance from the pedal generator using controls oriented about the handlebars, allows the user to activate the hub motor using a speed controlling device oriented about the handlebars, and allows the user to charge the battery by connecting to a standard 110V/220V AC power supply. A chain less cycle is a cycle where the input power from a rider is not converted into output power by the rear wheel through a gear and chain system connecting the pedals to the rear wheel.

KR 2012 001834 A discloses the preamble of claim 1, namely it discloses an electrical bicycle comprising a generator coupled to a pedal and an electric motor for rotating a rear wheel. A pedal speed sensing unit detects a rotational speed of the pedal (pedal speed Vp) and a wheel speed sensing unit determines a rotational speed wheel (wheel speed Vw). If the pedal speed Vp is equal to or greater than a speed value obtained by multiplying the wheel speed Vw by a predetermined constant k, a control unit short-circuits an output side of the generator via a pedal load control unit in order to increase a pedal load. When the pedal speed Vp is lower than the speed value obtained by multi-plying the wheel speed Vw by the preset constant k, the control unit temporarily disconnects the current supplied to the motor to temporarily stop the drive of the motor that rotates the drive.

According to WO 2013/124764 A1, a bicycle comprises an electric motor coupled to a wheel. A generator device is connected mechanically to a pedaling assembly to as to convert a mechanical pedaling power Wped into electric power. A control system controls a user's effort also acts on a resisting torque, which opposes pedaling of the latter. If an excessive user's effort is determined, a power required to the generator device Wgen is reduced and a possible power deficit is supplied from a storage device, for example a battery. In particular, the method may comprise a step of maintaining the electric power required to the generator device Wgen below a predetermined maximum power value.

KR 2012 0093569 A relates to an electric bicycle having a generator, a battery and an electric motor controlled by a control unit. A rotational speed of a pedal (pedal speed) and a rotational speed of a drive wheel (wheel speed) are transmitted as input signals to the control unit. The control unit controls a drive signal of the motor in accordance with these inputs such that a predetermined gear ratio between the pedal speed and the wheel speed is maintained. If the wheel speed is less than 70 rpm, said ratio is 1:1 wherein, if the wheel speed is more than 70 rpm, said ratio is 1:3. The controller controls the motor by a feedback control based on the pedal speed and the wheel speed.

DE 197 32 468 A1 discloses a hybrid muscle and electric powered hybrid vehicle with a generator, a pedal drive for driving the generator, a battery, an electric motors, sensors used for determining a speed of the vehicle, a slope sensor, a power sensor, and a control circuit. The control circuit determines on the basis on input data comprising measurement values of the said sensors an auxiliary electric power for compensating the losses due to a weight of the vehicle, driving resistances, and other system losses. The auxiliary electric power is drained from the battery in addition to an electric power generated by a user by means of the pedal drive and the generator.

In CN 201 761 618 U, a chainless transmission bicycle comprises a generator mechanically coupled to a pedal mechanism via a gearbox, and a battery electrically connected to the generator via a power generation regulator. Further, the bicycle comprises an electric drive motor, which is electrically coupled to the battery via a motor controller. The power generation regulator adjusts an output current of the generator, so that the input of a pedal energy is controlled and that an exercise riding motion is always in a constant state. In more detail, a pedaling frequency of the fitness riding is set to an own value and is not related to a velocity of the bicycle.

WO 00/59773 A2 discloses a drive system operated by muscle power comprising a pedal, a generator mechanically coupled to the pedal and an electric driving motor. An electric controller includes a control program for generating a counter torque with regard to a forward pedaling direction. The counter torque is dependent from a pedaling frequency f and a velocity.

A motor drive control device according to US 2013/0317679 A1 is related to a motor control of an electric power-assisted bicycle in accordance with a pedal operation.

The present invention relates to a drive system for a vehicle driven by an electric motor powered by a generator and possible other energy units (battery, super-capacitors, generators etc.), where the generator is connected to a naturally powered source such as, but not limited to, a biologically driven source, such as the pedals of a bicycle operated by a human being. A naturally powered source in the present context is to be understood as any source of an environmental kind such as wind, water flow, solar etc., or biologically such as human / animally driven, like a human feeding a generator with energy through pedals connected to a bicycle. In an more specific embodiment the present invention relates to a similar bicycle to those disclosed in the three documents, however where the counter force control are designed to match the driver experience of a traditional chain cogwheel system, to administer the driving better, according to the users wishes and/or needs, and where many of the previous described disadvantages of mechanical parts, gearing and construction limitations is avoided.

## SUMMARY OF THE INVENTION

The present invention in general terms relate to a device operating at a dynamic device speed related to conditions external to the device, and where the device at least partly is powered by a dynamic source operating a generator at a generator speed where the energy generated in the generator depend on a counter force in general, and a counter torque in the more specific embodiment, and where the generator is controlled with an input reference depending on the generator angular speed and the device speed.

The present invention in a more specific embodiment relates to a vehicle being powered by a dynamically changing naturally source where this in the preferred embodiment of the present invention is transmitted from the naturally source to a generator through a transmission mechanism, such a set of pedals and the vehicle is a bicycle.

The generator preferably is connected to the electric motor preferably through a controller, and / or to each of the further energy sources of the system (possible through the controller). Hereby is achieved that the vehicle may - through the controller - be powered by the generator without needing the further energy sources, but could also be used to charge these.

The main objective of the present invention is to control to pedal speed (or in the following just referred to as pedal speed) to fit the human body such to meet the drivers desires for a changed experienced counter force from the pedals. Pedal speed and generator angular speed (or just referred to as generator speed) are directly linked in that the rotation of the pedals by a driver of the vehicle generates the generator speed, optionally through some mechanical gearing. One object of the present invention thus is to regulate for the pedal speed to be maintained substantially at a constant level, this being solved by changing a counter force in the pedals, this being e.g. to reduce the counter torque when the pedal speed drops such to ease the pedalling but similar reducing the energy generated, and correspondingly when the pedal speed increases, the counter torque are increased to extract more energy in the generator.

The objective thus is to compensate for the changing conditions affecting the harvested power, and this is solved by a controller adjusting the counterforce of the generator and thereby regulating the relation between applied torque and resulting speed of the pedals.

The main object of the present invention is solved by a vehicle according to claim 1.

According to an aspect, the vehicle comprises a wheel being solely rotated by an electric motor, the energy for the electric motor at least partly being a dynamic naturally powered source powering a generator through a transmission mechanism, where the generator is capable of adding a counter force to the operation of the transmission mechanism and where the energy generation in the generator is related to the counter force, and where the counter force is controllable.

In this manner the pedal counter force acting on the driver from the pedals mainly is determined by a load current of the generator. By comparing the pedal speed, corresponding to the generator speed, with a target speed reference, R, then an error signal, €, is obtained. This error signal is amplified by a high gain compensator to increase the error signal with a factor, such like in the order of hundreds, or thousands or even more, to form a compensation signal. The compensation signal is to control the load of the generator, and thus the counter force, where the gain ensures a quick response, even a small change in pedal speed is changed into a large compensation signal and there through into a quick change of counter force to meet the desired angular speed. This forms a closed loop system capable of regulating the pedal velocity with high degree of precision regardless of applied force to the pedals by controlling the counter torque applied to the pedals through the generator.

To implement a closed feedback control of the counter force, or counter torque, to regulate the pedal speed, the vehicle further comprises a generator controller, the regulation formed by said controller being based on a first input signal, U1, depending on one or more user input such as a gearing ratio.

Since the driver naturally is not capable of producing a uniform force to the pedals throughout the full encirclement of the pedals, the first input signal in one embodiment further depend on the pedal position and is modulated according to a predefined profile in dependence of pedal positions. In this manner the lack of driver force at certain pedal positions may be countered for in the counter force. This profile could include that the counter force is reduced at the positions where the driver naturally will be delivering less force to the pedals.

In a special electric gearing embodiment, the regulation of the counterforce is based on keeping a constant factor of the speed of the vehicle to the generator speed. Such an modulation of the target angular velocity reference by the speed of the vehicle and/or the pedal position gives the characteristics from the traditional mechanical drive such as a multiple gear transmissions and/or non-circular chainings.

Benefits of the present invention include that no expensive mechanical torque measurements are required. By using closed loop techniques all main tolerances are cancelled out such as generator impedance and torque measurement. Total control of pedal velocity and thus all possible user experience implementations are ensured at the benefit of the driving experience of the driver of the vehicle.

A further object of the present invention is to provide a health related functionality which enables the vehicle to protect the human anatomy against excessive forces acting on the legs, where this is accomplished by introducing a user set limitation on the generated counter force.

The result is an operation mode where the pedals, if subject to a higher than allowed force applied, will release the counter force momentary thus increasing the pedal speed.

FIGURES

Fig. 1    A vehicle using the controller of the present invention

Fig. 2    Diagram of control system according to one embodiment of the present invention

Fig. 3    Diagram of control system according to a second embodiment of the present invention

Fig. 4    Diagram of control system according to a third embodiment of the present invention

DETAILED DESCRIPTION OF THE INVENTION

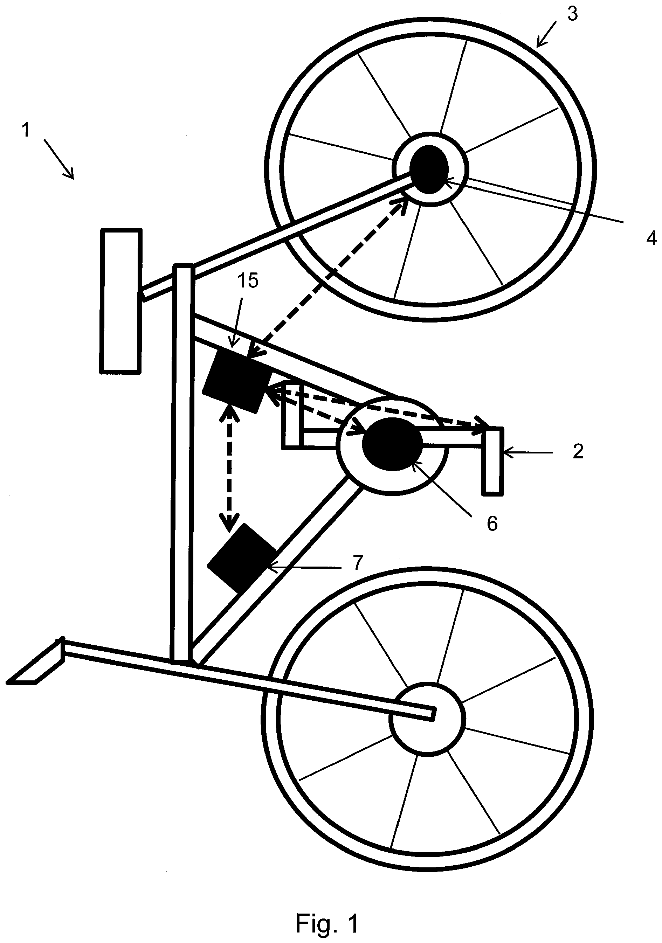

The present invention relates to a vehicle driven by naturally generated power, especially human generated power formed by converting pedalling power into electrical energy or power (voltage), that again, directly or indirectly, is feed to an electric motor attached to a wheel of the vehicle and where the electric motor then makes the wheel rotate thus forming a movement of the vehicle. Fig. 1 illustrates the basic set up of the invention exemplified through a vehicle (1) in the embodiment of a bicycle where all usual chain transmission of power from the pedals (2) to the wheels (3) are replaced by transfer of electrical energy feeding the electric motor (4). The pedals (2) are connected to a generator (6) thus changing pedalling energy into electrical energy.

In the illustrated embodiment the generator (6) is connected to a control section (15) and where the control section (15) further controls a battery (7) and optionally may be connected to sensors registering pedal (2) position and / or pedalling speed.

When driving an ordinary chain driven vehicle (1) (such as a bicycle) by pedalling, then the driver of the vehicle (1) experiences a counter force from the pedals where this for example depend on the slope of the path but also from the chain transmission itself.

In a chain-less vehicle purely being driven by an electric motor the counter force arise through different means, such as the electronically load, or the generator load current, of the generator as described throughout this description, but also to minor extend the inertia of the generator and the eddy current losses in it.

The counter force experienced by the user when pedalling, also called the counter torque (**Tcounter**) is formed by a generator load current, where this may be formed by a resistive load, such as a Ohmic load, being applied to the generator such as by a power stage in the generator controller. This then also defines the energy extracted through the generator, the higher the resistive load the higher the generator generated energy, or power and thus the more energy to be transferred to the battery or the motor. This load may be controlled very accurate and fast, in the order less than 1 ms.

The generated energy, **Egenerator,** is related to the counter torque, **Tcounter**, and the pedaling velocity, **Vpedal,** or in mathematical terms:

$$\textbf{Egenerator = Tcounter x Vpedal}$$

During the full rotation of the pedals, the possible torque delivered by the driver varies, when the pedals are in the vertical position, then the driver will be capable of delivering significantly less force to the pedals than in the horizontal positions, where the position of the pedals is seen in relation to the driver. This leads to an uneven energy delivery during the full rotation of the pedals, or an uneven experience for the user in case the system does not compensate for this.

A special case is during starting of the vehicle (1) where the pedalling rate is very low. Here it may be necessary to apply a negative voltage across the generator in order to generate a sufficient counter force. In this special case energy is spend on controlling the pedal position and/or speed.

A further factor is the energy delivered by the driver seen in average over one full rotation of the pedalling and the reaction of the controller when this changes.

The battery thus is involved in at least two controls, one related to the counter force in the generator and the second to the drive assist energy added to the motor. A third control could be by absorbing braking energy.

In an alternative embodiment the vehicle would comprise no battery, all the energy delivered to the motor then would come from the generator, or there may be alternative additional power sources such as fuel cells or solar cells.

A number of different strategies can be employed for the control based on different input.

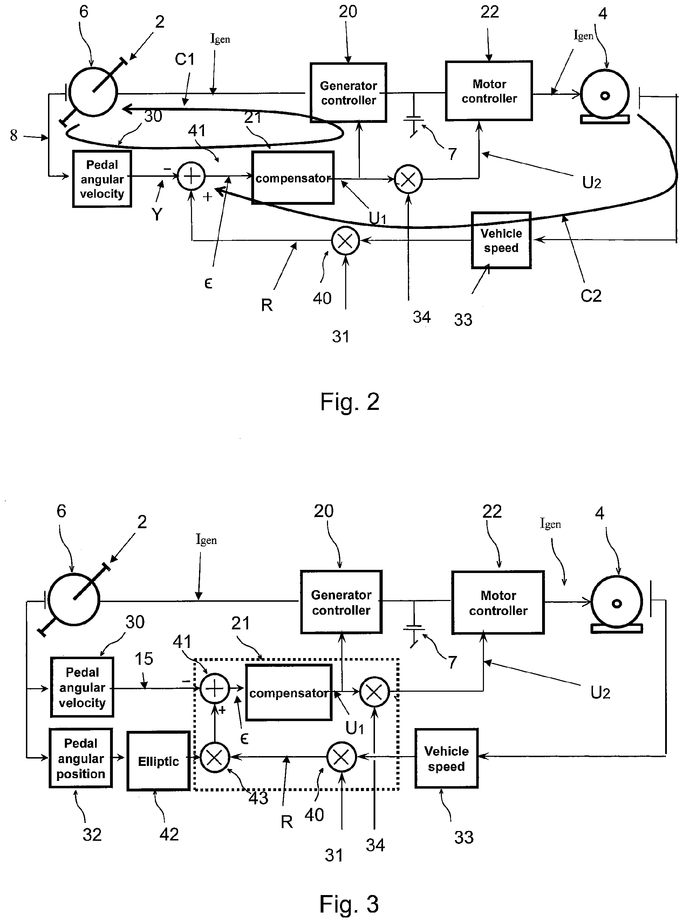

Fig. 2 illustrates the control system of the vehicle (1) according to the present invention, the figure showing the generator (6) forming part of the pedalling system (2) and being connected to a generator controller (20). The generator controller includes a highly efficient AC-DC power conversion stage converting the energy produced by the generator (6) and feeding it to the battery (7) and/or the motor (4). The generator current is closely related to the generator torque, or counter Torque, **Tcounter**, as it has also been described above in relation to Fig.1. The generator controller further includes a current mode controller enabling a direct control of the counter force through a generator torque command signal U1

In the same fashion the motor controller (22) converts the DC energy into an AC signal for controlling the motor. Also the motor controller includes means for controlling the motor torque by applying a torque command signal U2.

The power applied to the motor (4) is supplied from the generator (6) and / or the battery (7). The motor experiences an external resistance that for the illustrated example could include the vehicle driving uphill, driving against the wind etc., or to a minor extend resistive losses within the system itself. Many of these factors usually are highly dynamic.

The motor controller (22) controls motor torque, **Tmotor**, , and the ratio of power to be supplied from the battery (7) in addition to the supplied power from the generator (6). The motor controller (22) controls and knows the actual angular speed of the motor, the motor speed, this being directly related to the vehicle speed.

The generator (6) generates at least partly the power for the motor (4) where this and where this power depends on the generator speed and the counter torque, **Tcounter**. The higher the counter torque the more power is extracted per evolution of the pedals as also described above. Therefore, knowing the counter torque and the generated voltage it is possible to calculate generator speed, corresponding to the pedal angular speed being looped to the regulation circuit as system output, the box (30) is a pedal speed detecting block representing finding the generator speed where the present invention is not limited to any specific method.

The basic of the present invention is to introduce a control to a device operating under essentially unpredictable dynamic counter conditions at a device speed (a vehicle, or more specifically a bicycle, driving on surface at a vehicle speed, corresponding to motor speed) where the device at least partly is powered by an essentially unpredictable dynamic source operating a generator at a generator speed (such as a natural source like a human being driving a generator of a bicycle) and optionally partly powered by a more predictable power source (such as a capacitor and / or battery). The essential of the present invention is not necessarily to maintain the device at some given or predefined speed (vehicle speed, or motor speed), nor to maintain the generator at some pre-defined speed, but rather to regulate with the aim to maintain their relation constant, optionally by some gearing ratio.

The essential in the regulation according to the present invention is a two loop regulation as seen in Fig. 2, where the first (C1) is related to the generator controller (20) based on an output Y and a reference R, and the second (C2) to generate the reference R.

In the first control loop (C1) the first system input U1 is the control reference for the generator controller (20) having a standard internal regulation and adjusting the counter torque, **Tcounter,** applied to the generator (6), increasing it if the pedal angular speed (30) gets higher than the first system input $U_1$ and vice versa.

To control the pedal speed a negative feedback loop is formed including pedal speed detecting block (30), a reference signal R, a difference operator (41) and a compensator (21). The Y is the feedback signal related to the detected vehicle speed (measured or calculated) which optionally re-arranged as a motor speed is compared to the reference input R giving the error signal ε. The error signal is then feed to a compensator unit (21) with a sufficient gain enabling the loop to regulate the pedal speed by controlling the counter torque, **Tcounter**, applied to the generator (6) in reference to the reference input R. This loop is referred to as the "cadence loop".

The error, ε, being the input to the compensator (21) in this block is given an adequate gain to obtain a precise control of the system the output being the first system input, U1. The compensator can be realized in the continuous time or in the discrete time domain by arranging any number of poles and zeroes in a transfer function in such way that a stable closed loop is obtained. A simple implementation can be realised in form of a single pole/zero system also known as PI or PID controller.

The second control loop (C2) is introduced to generate the reference signal R. This loop enables the emulation of the classic operation of a chained bike by linking the bike speed to the control of the pedal speed. The loop contains a bike speed detector (33), multiplication (40) by a control input (31) factor in the following referred to as "gear ratio". The output of the speed detector (30) is multiplied by the gear ratio (31) signal and feed to the cadence loop's (C1) reference input R. This relate the pedal speed to the vehicle speed, or rearranged as motor speed, by a factor, the "gear ratio" (31) meaning the relative transmission of power from the pedals to the vehicle may be changed as for ordinary mechanical gearings for chained bicycles, however unlike mechanical gears there are no gearing steps. The gear ratio (31) can be controlled directly by the user setting a gear level in the usual manner (level 1, level 2) where the gear ratio (31) may be the gear level or may be scaled or used in an algorithm, or controlled automatically, as later described.

The second control signal U2 for motor control is formed by the first control signal U1 multiplied by the control signal (34) in the following referred to as "torque ratio". The purpose is to give a close match of feeling of the driver of the bicycle of the applied force to pedals and the resulting motor torque being close to that of a classic chained bike, but without the losses in the power conversion and especially the resistive losses in the generator and motor. Since the generator and motor is controlled in the current domain, the resistive losses are not in the equation and an error on the torque ratio of less than 5% can be obtained.

For the bicycle of example U1 is a factor corresponding to how hard the driver is pedaling, or more generally how hard, or with what torque the natural source acts on the generator. The counter torque, **Tcounter**, in the generator is then regulated with reference to actual vehicle speed in a proportion set by the gearing ratio (31). As the vehicle however is driven by the motor the same signal is send to the motor as control signal to the motor controller reacting by feeding power to the motor corresponding to the geared relation to the actual pedal speed, or torque (or in more general terms, corresponding to the actual power delivered from the natural source to the generator)..

The motor controller then ensures the needed power (voltage) is supplied to the motor by drawing any extra needed power from the battery.

The experience in a chain driven bicycle is a direct transfer of all power from the pedals to the wheel through the chain, for such vehicles this is an obvious matter, this also helping to maintain the balance. However for chain-less vehicles where the motor (4) drives the wheel (2) based this is not as obvious.

In a classical bicycle having only one gearing a classical mechanical gearing may have a ratio (cogwheel torque divided by pedal torque) of around for example 0.43. In one embodiment according to the present invention the gear ration is calibrated such that the motor torque to generator pedal (generator) torque is set to be 1/0.43, or in more general terms as the inverse to the gearing ratio.

This is due to another factor multiplied to a signal within the control, the 'torque ratio' (34), being a factor multiplied to the first system input U1 forming the second system input U2 being the control input to the motor controller (22). This factor is set such that the total ratio of the motor torque to the pedal torque will be 0,43, or more generally at any predefined total torque ratio, when an optionally user set 'assist level' in 'neutral' setting of 1 is scaled to form the torque ratio by this factor.

This could e.g. be in the same manner as the for the gear, that one of the handles has an 'assist level' setting of 1, 2 etc., where '1' is the 'neutral' setting, the factor 2 then is the double torque ratio etc. The 'assist level' then is scaled to the 'torque ratio' (34) being multiplied forming the second system input U2. Since this does not affect the signal U1 for the generator controller (20), only that for the motor controller (22), it therefore changes the motor speed, and thus the vehicle speed, seen in relation to the power generated from the pedals (2), this is the extra assisting power to the vehicle seen in relation to the pedaling speed according to the user desired assistance. As the motor (4) then would require more power than what is supplied by the generator (6) the motor controller (22) automatically will drag this from the battery (7).

The torque ratio signal (34) can be directly set by user as the assist level, or automatically set as to be explained later.

The two factors being multiplied to the control signal, the gearing ratio (31) and torque ratio (34), may as exemplified above be simple user settings where the user selects one of a multiple possible settings. Alternatively one or both of them may be based on more advanced algorithms taking into account a number of factors such as external parameters like ambient conditions, state of rain, wind, temperature, humidity, coming slopes etc, the system then optionally comprising the needed sensors or communication devices to gain these information.

The algorithms may be related to a relation between the gearing ratio (31) and torque ratio (34) optionally based on external or driver parameters adjusting the related gear level and/or assist level to shift more of the regulation to the one or the other.

The algorithms may be overruling the user settings of the gearing ratio (31) and / or torque ratio (34) or they may take them into account just adjusting them temporarily or permanently until reset.

The algorithms may also be related temporarily or permanently (until changed again) set the gearing ratio (31) and / or torque ratio (34) dynamically in time to regulate the vehicle (1) to a given velocity, cadence etc.

The generator controller (20) and motor controller (22) physically may not be two different controllers but two controlling functions of one controller associated with the vehicle.

The one regulation is based on knowing the cadence of the driver of the vehicle (1), this being pedal angular speed being how fast the user is pedaling and thus directly related to how the user will experience driving the vehicle (1) forwards. This could e.g. be measured by attaching sensors to the pedals (2), but could also be calculated knowing the generator angular speed since these are directly related, the pedals (2) possible being directly connected to the generator (6) or indirectly though some mechanical or electrical gearing. The actual angular speed (30) of the generator (6) (or in the following just referred to as generator speed) is for example by measuring directly through the output AC voltage from the generator (6), for example by zero crossing measurements, by peak measurement, by using hall element(s) at the rotors etc. When using hall elements the precision of the measurement may be increased by adding more hall elements. To minimize factors like electromagnetic noise etc., the measurements (zero crossing or peak) could be made at a separate dummy winding introduced and connected to the generator.

The pedal angular speed and the generator angular speed (30) (or generator / pedal angular velocity) are directly linked, the one can be directly calculated from the other, therefore in the following embodiments even though there is referred to the generator speed (30) (or just generator speed (30)) then this might just as well be replaced by the measured pedal speed (30).

By controlling energy flow from/to the battery (7) the generator controller (20) can vary the load current of the generator and thereby obtaining the necessary counter force for controlling the pedal speed from 0-120 rpm at peak torque levels up to well above150Nm.

At low pedal speeds it may be required for the generator controller to be able to apply negative generator voltages in order to overcome the resistive losses inside the generator. This mode will occur when the electromotive force (voltage) generated is lower than the voltage drop due to series resistance in the generator.

The generator can be of all possible type that be: single phase AC, single phase DC, 1-phase induction generator, 3 phase induction, etc.

The pedal angular position (32), as seen in Fig. 3, may be measured by at least one sensor attached to the estimate when the pedals pass a point whereby the actual frequency of the pedalling may be calculated and thus it is possible to estimate the pedal position at any time at a substantially good precision. More sensors may be added to increase the precision just as alternative methods to measure or estimate the pedal position may be implemented just as well.

Fig. 3 in the basic illustrate the same system as fig. 2 but with an additional regulation factor used to emulate an elliptically shaped chainring, where it is taken into account that the driver delivered force to the pedals depend on the pedal position (32), thus multiplying (43) a factor to the reference R in dependence to the pedal position to counter the user ability to deliver force.

This evens out the feeling of the driver in the pedals (2) throughout a full rotation of the pedals giving a smoother ride.

This is a pedal profile modulation of the desired cadence as a function of the pedal position. This mode will emulate the effect of using a non-circular chain ring. Known from a mechanical chain transmission, this effect is of some persons believed to increase the human power performance.

The speed (33) of the vehicle (1) may be measured or estimated in a number of different manners too, such as it is well known from e.g. cycle computers using magnetic elements attached to a wheel or using GPS or using the hall elements in the motor.

Any individual or number of the inputs may then be used in a number of different ways, where some will be described below. The system of the present invention may be such that it is predefined to use one of the embodiments, or that e.g. the user may choose between some or all of the different embodiments.

Fig. 2 and 3 further shows a control section (15) including the compensator (21), this being where the signals are compared, added and modified under given simple or advanced algorithms.

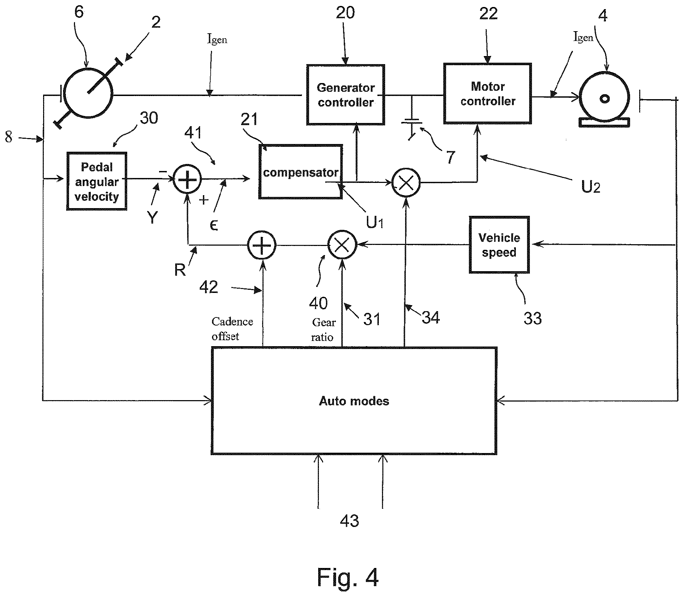

Fig. 4 illustrate another embodiment of the present invention illustrating two further aspects, one being the user set levels (43), such as but not limited to a set gearing level and assist level, being modified according to inputs such as the pedal speed (30) and the vehicle speed (33) as illustrated (but alternative or additional parameters would also apply such as external to the vehicle (1)) through some algorithms forms the inputted gearing ratio (31) and torque ratio (34).

The figure further illustrate another embodiment that is not limited to the embodiment of the present figure but would also apply to the embodiments of figures 2 and 3, where the vehicle speed scaled signal is added to a cadence offset value (42).

As said above the control of the vehicle (1) according to the present invention may utilize a number of very different strategies and algorithms to generate the control error in the control section (15). The vehicle (1) could be prefabricated with any one or a plural of them or they could be user optional choices for the driver. A switch between them could also be made automatically under some algorithm.

The system may introduce one or more of the different control strategies, and may include a change between the different strategies. There could for example be one chosen control strategy during starting of the vehicle changing to another when a certain level of velocity has been reached. There may also be changed to a different control strategy when breaking.

In a further embodiment the vehicle (1) further comprises a capacitor where power, or energy, may also be transferred between any of the battery, the capacitor, and the electric motor.

Electrical energy may thus be transferred either directly from the generator to the electric motor, or from the battery and / or capacitor or in any combination and with any relative fraction of energy transferred there from.

The electrical energy formed in the generator may be stored in the battery and / or the capacitor, just as energy stored in the capacitor may be transferred for storage in the battery and / or vice versa.

Other means to charge the battery and capacitor may also be introduced into the system, such as breaking energy. When the a vehicle breaks much of the kinetic energy due to the speed and movement of the vehicle is transformed into heat, but using e.g. the electric motor as a generator, the energy may instead be stored as energy in the battery and / or capacitor, the connections and thus transferring the energy from the electric motor to the battery and capacitor. Braking may be activated by pedalling backwards where the pedals are blocked in backward direction mechanically in the gear and the in-wheel motor is inverted with a load depending on the force on the pedals. The braking could also be by hand brake or a combination and / or including a system where the first part of the breaking is done through engine load as also described above transferring energy to the storage means and and where the breaking subsequently is purely mechanical in any known manner. Introducing such a standard mechanical breaking would also introduce a safety mechanism in the case the electrical parts somehow be damaged. Other means to harvest energy could also be connected such as sun cells. Finally the system may comprise different other sources of power, e.g. batteries, Ultra capacitors, solar cells or event fuel cells which - for practical reasons - may work at very different voltage levels, the voltage levels at which they respectively works most efficient.

It is essential to the present invention that the vehicle does not depend on having power storage means like capacitor and battery, but could be run directly by the generator powering it. The storage means like capacitor and battery may also be removable and rechargeable by means external to the vehicle, but where the vehicle may be used anyhow.

The invention may in one embodiment introduce means whereby the user of the vehicle may be able to set (change) the rules of when (and how much) to use of which energy source.

The system also may include the possibility to invert generator and electric motor meaning the generator then operates as electric motor and / or the electric motor operates as generator.

**Claims**

1. A vehicle (1) operating a dynamic vehicle speed related to conditions external to the vehicle (1) where the vehicle (1) at least partly is powered by a dynamic source operating a generator (6) at a generator speed where the energy generated in the generator (6) depend on a counter torque (Tcounter) and where the generator (6) is controlled with an input reference (R) depending on the generator angular speed and the vehicle speed, wherein the vehicle (1) further comprises a wheel (3) being solely rotated by an electric motor (4) at least partly powered by said generator (6) through a transmission mechanism (2) coupled to said dynamic source, where a controller (20) is configured to control said counter torque (Tcounter) wherein the control circuit of said generator (6) includes a first control loop (C1), which is a feedback regulation based on an output (Y) and the reference (R), wherein the output (Y) is the generator speed, **characterized in that** the first control loop (C1) is to provide an error signal ($\varepsilon$) to be used to generate a regulation input signal to the generator controller (20) to control the counter torque (Tcounter) wherein a first system input (U1) is formed from the error signal $\varepsilon$ by a section (21) inducing it with a gain, the first system input (U1) being the input signal to the generator controller (20), and that the reference (R) is generated in a second control loop (C2), wherein the reference (R) is related to the vehicle speed (33) recalculated as an angular speed, or correspondingly the motor speed, and wherein, said reference (R) is formed from the vehicle speed (33) recalculated as an angular speed, or correspondingly the motor speed being multiplied by a gear ratio (31).

2. The vehicle (1) according to claim 1, wherein the reference (R) further is formed by adding a cadence offset (42).

3. The vehicle (1) according to claim 1 or 2, wherein the first system input (U1) also forms basis for the control signal to the motor controller (22) regulating the speed of the motor (4) and thus of the vehicle (1), the motor controller (22) controlling to feed power from the battery (7) to the motor (4) when the generator (6) generated power is not sufficient to obtain the speed according to the regulation.

4. The vehicle (1) according to claim 3, wherein a second system input (U2) is formed from the first system input (U1) by multiplying it with a torque ratio 34, the second system input (U2) being the control input to the motor controller (22).

5. The vehicle (1) according to any of the preceding claims, wherein the gear ratio (31) and / or the torque ratio (34) and / or the cadence offset (42) is based on a level set manually by the user of the vehicle (1).

6. The vehicle (1) according to any of the preceding claims, the gear ratio (31) and / or the torque ratio (34) and / or the cadence offset (42) is based on an algorithm automatically setting the level(s) based on parameters external to the vehicle (1).

7. A vehicle (1) according to any of the preceding claims, where the reference (R) further depend on the pedal position (32) by multiplying (43) it with a factor according to a predefined profile in dependence of pedal positions (32).

8. A vehicle according to any of the preceding claims, where the controller is able to apply a negative voltage across the generator in order to generate a sufficient counter force in order to overcome the resistive losses inside the generator where the pedal rate is very low.

9. A vehicle according to any of the preceding claims, further including a limitation on the generated counter force, such that when subject to a higher than allowed force according to the limitation, then where the counter force will be released momentary thus increasing the pedal speed.

10. Vehicle (1) according to any of the preceding claims, wherein the vehicle (1) is an electrically operated chainless bicycle and said dynamic source is the driver of the bicycle pedalling in a set of pedals (2) connected to said generator (6).

**Patentansprüche**

1. Fahrzeug (1), das mit einer dynamischen Fahrzeuggeschwindigkeit arbeitet, die auf Bedingungen außerhalb des Fahrzeugs (1) bezogen ist, wobei das Fahrzeug (1) zumindest teilweise von einer dynamischen Quelle angetrieben wird, die einen Generator (6) mit einer Generatordrehzahl betreibt, bei der die im Generator (6) erzeugte Energie von einem Gegenmoment (Tcounter) abhängt, und wobei der Generator (6) mit einem Eingangssollwert (R) in Abhängigkeit von der Generator-Winkelgeschwindigkeit und der Fahrzeuggeschwindigkeit gesteuert wird, wobei das Fahrzeug (1) weiterhin ein Rad (3) aufweist, das ausschließlich von einem Elektromotor (4) gedreht wird, der zumindest teilweise von dem Generator (6) über einen mit der dynamischen Quelle gekoppelten Übertragungsmechanismus (2) angetrieben wird, wobei ein Regler (20) zur Regelung des Gegenmoments (Tcounter) ausgebildet ist, wobei der Regelkreis des Generators (6) einen ersten Regelkreis (C1) aufweist, der eine auf einem Ausgang (Y) und dem Sollwert (R) basierende Regelung ist, wobei der Ausgang (Y) die Generatordrehzahl ist, **dadurch gekennzeichnet, dass** der erste Regelkreis (C1) ein Fehlersignal ($\varepsilon$) bereitstellen soll, das zur Erzeugung eines Regelungseingangssignals an die Generatorsteuerung (20) zur Steuerung des Gegenmoments (Tcounter) verwendet werden soll, wobei ein erster Systemeingang (U1) aus dem Fehlersignal ($\varepsilon$) durch einen Abschnitt (21) gebildet wird, der es mit einer Verstärkung induziert, wobei der erste Systemeingang (U1) das Eingangssignal für die Generatorsteuerung (20) ist, und dass der Sollwert (R) in einem zweiten Regelkreis (C2) erzeugt wird, wobei der Sollwert (R) auf die als Winkelgeschwindigkeit umgerechnete Fahrzeuggeschwindigkeit (33) oder entsprechend der Motordrehzahl bezogen wird, und wobei der Sollwert (R) im Einzelnen aus der als Winkelgeschwindigkeit umgerechneten Fahrzeuggeschwindigkeit (33) oder entsprechend der mit einem Übersetzungsverhältnis (31) multiplizierten Motordrehzahl gebildet wird.

2. Fahrzeug nach Anspruch 1, wobei der Sollwert (R) weiterhin durch Addition eines Trittfrequenzversatzes (42) gebildet wird.

3. Fahrzeug nach Anspruch 1 oder 2, wobei der erste Systemeingang (U1) auch die Grundlage für das Steuersignal an die Motorsteuerung bildet, die die Geschwindigkeit des Motors (4) und damit des Fahrzeugs (1) regelt, wobei die Motorsteuerung (22) die Aufgabe hat, den Motor (4) mit Strom aus der Batterie (2) zu versorgen, wenn der vom Generator (6) erzeugte Strom nicht ausreicht, um die Geschwindigkeit gemäß der Regelung zu erhalten.

4. Fahrzeug nach Anspruch 3, wobei ein zweiter Systemeingang (U2) aus dem ersten Systemeingang (U1) durch Multiplikation mit einem Drehmomentverhältnis (34) gebildet wird, wobei der zweite Systemeingang (U2) der Steuereingang für die Motorsteuerung (22) ist.

5. Fahrzeug nach einem der vorherigen Ansprüche, wobei das Übersetzungsverhältnis (31) und/oder das Drehmomentverhältnis (34) und/oder der Trittfrequenzversatz (42) auf einem vom Benutzer des Fahrzeugs (1) manuell eingestellten Niveau basiert.

6. Fahrzeug (1) nach einem der vorhergehenden Ansprüche, wobei das Übersetzungsverhältnis (31) und/oder das Drehmomentverhältnis (34) und/oder der Trittfrequenzversatz (42) auf einem Algorithmus basiert, der automatisch den/die Pegel auf der Grundlage von Parametern außerhalb des Fahrzeugs (1) einstellt.

7. Fahrzeug (1) nach einem der vorhergehenden Ansprüche, wobei der Sollwert (R) ferner von der Pedalstellung (32) abhängt, indem er mit einem Faktor gemäß einem vorbestimmten Profil in Abhängigkeit von den Pedalstellungen (32) multipliziert (43) wird.

8. Fahrzeug (1) nach einem der vorhergehenden Ansprüche, wobei die Steuerung in der Lage ist, eine negative Spannung an den Generator anzulegen, um eine ausreichende Gegenkraft zu erzeugen, um die Widerstandsverluste im Generator zu überwinden, wenn die Pedalgeschwindigkeit sehr niedrig ist.

9. Fahrzeug (1) nach einem der vorhergehenden Ansprüche, das weiterhin eine Begrenzung der erzeugten Gegenkraft aufweist, so dass, wenn es einer höheren als der nach der Begrenzung zulässigen Kraft ausgesetzt wird, die Gegenkraft kurzzeitig frei gesetzt wird, wodurch die Pedalgeschwindigkeit erhöht wird.

10. Fahrzeug (1) nach einem der vorhergehenden Ansprüche, wobei das Fahrzeug (1) ein elektrisch betriebenes kettenloses Fahrrad ist und die dynamische Quelle der Fahrer des Fahrrads ist, der in einem Satz von Pedalen (2), die mit dem Generator (6) verbunden sind, in die Pedale tritt.

## Revendications

1. Véhicule (1) mettant en action une vitesse de véhicule dynamique liée à des conditions externes au véhicule (1) où le véhicule (1) est au moins partiellement propulsé par une source dynamique mettant en action un générateur (6) à une vitesse de générateur où la puissance générée dans le générateur (6) dépend d'un couple de réaction (Tcounter) et où le générateur (6) est commandé avec une référence d'entrée (R) dépendant de la vitesse angulaire de générateur et de la vitesse de véhicule,
dans lequel le véhicule (1) comprend en outre une roue (3) seulement mise en rotation par un moteur électrique (4) au moins partiellement alimenté par ledit générateur (6) via un mécanisme de transmission (2) couplé à ladite source dynamique, où un dispositif de commande (20) est configuré pour commander ledit couple de réaction (Tcounter), dans lequel le circuit de commande dudit générateur (6) comprend une première boucle de commande (C1), laquelle est une rétrorégulation sur la base d'une performance (Y) et de la référence (R), dans lequel la performance (Y) est la vitesse du générateur, **caractérisé en ce que** la première boucle de commande (C1) sert à fournir un signal d'erreur ($\varepsilon$) à utiliser pour générer un signal d'entrée de régulation pour le dispositif de commande de générateur (20) pour commander le couple de réaction (Tcounter), dans lequel une première entrée système (U1) est formée à partir du signal d'erreur ($\varepsilon$) par une section (21) qui le contient avec un gain, la première entrée système (U1) étant le signal d'entrée pour le dispositif de commande de générateur (20), et que la référence (R) est générée dans une deuxième boucle de commande (C2), dans lequel la référence (R) est liée à la vitesse de véhicule (33) recalculée en tant que vitesse angulaire, ou vitesse de moteur de manière correspondante, et dans lequel ladite référence (R) est formée à partir de la vitesse de véhicule (33) recalculée en tant que vitesse angulaire, ou vitesse de moteur de manière correspondante, multipliée par un rapport de transmission (31).

2. Véhicule (1) selon la revendication 1, dans lequel la référence (R) est en outre formée en additionnant un décalage de cadence (42).

3. Véhicule (1) selon la revendication 1 ou 2, dans lequel la première entrée système (U1) forme également une base pour le signal de commande pour la commande du moteur (22) régulant la vitesse du moteur (4), et donc du véhicule (1), la commande du moteur (22) assurant la commande pour alimenter le moteur (4) avec l'énergie de la batterie (7) lorsque la puissance générée par le générateur (6) n'est pas suffisante pour obtenir la vitesse selon la régulation.

4. Véhicule (1) selon la revendication 3, dans lequel une deuxième entrée système (U2) est formée à partir de la première entrée système (U1) en la multipliant par un rapport de couple (34), la deuxième entrée système (U2) étant l'entrée de commande pour la commande du moteur (22).

5. Véhicule (1) selon l'une quelconque des revendications précédentes, dans lequel le rapport de transmission (31) et/ou le rapport de couple (34) et/ou le décalage de cadence (42) sont basés sur un niveau réglé manuellement par l'utilisateur du véhicule (1).

6. Véhicule (1) selon l'une quelconque des revendications précédentes, le rapport de transmission (31) et/ou le rapport de couple (34) et/ou le décalage de cadence (42) sont basés sur un algorithme réglant automatiquement le(s) niveau(x) sur la base de paramètres externes au véhicule (1).

7. Véhicule (1) selon l'une quelconque des revendications précédentes, où la référence (R) dépend en outre de la position des pédales (32) en la multipliant (43) par un facteur selon un profil prédéfini en fonction de positions des pédales (32).

8. Véhicule selon l'une quelconque des revendications précédentes, où le dispositif de commande est capable d'appliquer une tension négative au générateur afin de générer une contre-force suffisante pour surmonter les pertes par résistance à l'intérieur du générateur lorsque la vitesse des pédales est très lente.

9. Véhicule selon l'une quelconque des revendications précédentes, comprenant en outre une limitation de la contre-force générée de sorte qu'en cas de soumission à une force plus élevée qu'autorisée selon la limitation, alors la contre-force va être momentanément relâchée en augmentant ainsi la vitesse des pédales.

10. Véhicule (1) selon l'une quelconque des revendications précédentes, dans lequel le véhicule (1) est une bicyclette sans chaîne fonctionnant électriquement, et ladite source dynamique est le conducteur de la bicyclette pédalant dans un ensemble de pédales (2) reliées audit générateur (6).

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011266082 A
- US 7156780 B
- US 20120202649 A
- KR 2012001834 A
- WO 2013124764 A1
- KR 20120093569 A
- DE 19732468 A1
- CN 201761618 U
- WO 0059773 A2
- US 20130317679 A1